# EUROPEAN PATENT APPLICATION

(11) **EP 2 317 771 A2**
(43) Date of publication of application: **04.05.2011**
(21) Application number: 10170165.4
(22) Date of filing: 20.07.2010
(51) Int. Cl.: H04N 9/82, H04N 5/445, H04N 21/431, H04N 21/432, H04N 21/433, H04N 21/84, H04N 5/765

(54) **Electronic apparatus and program-related information display generating method**

(30) Priority: 31.08.2009 JP 2009200813
(71) Applicant: Kabushiki Kaisha Toshiba, Tokyo 105-8001 (JP)
(72) Inventor: Kuwahara, Kazuki, Minato-ku Tokyo (JP)
(74) Representative: Henkel, Feiler & Hänzel

(57) **Abstract**

An electronic apparatus includes: a first reproducing module configured to switchably reproduce a first video program and a second video program, which are simultaneously recorded in different channels, the first reproducing module being configured to start reproducing the second video program, when switching reproduction from the first video program to the second video program, from a time point in the second video program, the time point corresponding to a time point in the first video program at which the reproduction of the first video program is terminated; and a program-related information display generating module configured to generate a program-related information display while a video program is reproduced by the first reproducing module, the program-related information display indicating a recorded time at which an image of a currently reproduced video program is recorded and information related to a channel in which the currently reproduced video program is broadcasted.

## Description

### CROSS-REFERENCE TO THE RELATED APPLICATION(S)

The present application is based upon and claims priority from prior Japanese Patent Application No. 2009-200813, filed on August 31, 2009, the entire contents of which are incorporated herein by reference.

### BACKGROUND

### 1. Field

The present invention relates to an electronic apparatus and a program-related information display generating method for generating display information that indicates information concerning a program to be reproduced.

### 2. Description of the Related Art

In recent years, with the development of video recording technology and the progress of increase in the capacity of a storage medium, users have come to be able to record many videos in video recordable electronic apparatuses. As an amount of recordable space of the storage medium increases, the recordable number of programs increases. Consequently, it has become difficult for users to recognize what program is shown by reproducing recorded video data.

Thus, a digital video recorder has been proposed, which displays a recording clock-time on a screen for showing a program, such that when a user views a program recorded in the past, the user can recognize a time and date, at which the program is recorded. An example of such digital video recorder is disclosed in JP-A-2007-281641.

There is proposed an electronic apparatus, which has functions of simultaneously receiving a plurality of broadcast waves thereby to simultaneously record a plurality of programs (videos) in parallel. In the case of simultaneously recording a plurality of programs to view the programs, a reproducing method can be performed so that even when a program to be currently shown on the screen is changed from a certain one of the plurality of programs, which is broadcasted on a channel in the past, to another one of the plurality of recorded programs, which is broadcasted on another channel simultaneously with the former program, by switching the former channel to the latter channel by performing a zapping operation (channel switching operation) during the former program. At that time, users can view the programs as if the users went back to the past and viewed the programs during the programs were actually broadcasted.

However, if a user can view a program in a state in which a zapping operation can be performed as described above, it is difficult for the user to know when a currently reproduced program was broadcasted, and what broadcasting station (or what channel) broadcasted the program. Thus, it is difficult for the user to identify a currently viewed program.

### SUMMARY

One of objects of the present invention is to provide an electronic and a program-related information display generating method, which facilitate, when programs simultaneously recorded are viewed, users' identification and viewing of a currently viewed program.

According to an aspect of the present invention, there is provided an electronic apparatus including: a first reproducing module configured to switchably reproduce a first video program and a second video program, which are simultaneously recorded in different channels, the first reproducing module being configured to start reproducing the second video program, when switching reproduction from the first video program to the second video program, from a time point in the second video program, the time point corresponding to a time point in the first video program at which the reproduction of the first video program is terminated; and a program-related information display generating module configured to generate a program-related information display when the first reproducing module reproduces a video program, the program-related information display indicating a recorded time at which an image of a currently reproduced video program is recorded and information related to a channel in which the currently reproduced video program is broadcasted.

According to another aspect of the present invention, there is provided a program-related information display generating method including: switchably reproducing a first video program and a second video program, which are simultaneously recorded in different channels; starting to reproduce the second video program, when switching reproduction from the first video program to the second video program, from a time point in the second video program, the time point corresponding to a time point in the fist video program at which reproduction of the first video program is terminated; and generating a program-related information display when a video program is reproduced, the program-related information display indicating a recorded time at which an image of a currently reproduced video program is recorded and information related to a channel in which the currently reproduced video program is broadcasted.

### BRIEF DESCRIPTION OF THE DRAWINGS

A general configuration that implements the various features of the present invention will be described with reference to the drawings. The drawings and the associated descriptions are provided to illustrate embodiments of the invention and not to limit the scope of the invention.
FIG. 1 is a schematic perspective diagram illustrating an example of the external appearance of a digital television set including an electronic apparatus according to an embodiment of the invention.
FIG. 2 is a block diagram illustrating an example of the configuration of the digital television set according to the embodiment of the invention.
FIG. 3 is a block diagram illustrating an example of the configuration of functional blocks concerning a program-related information display of the digital television set according to the embodiment of the invention.
FIG. 4 is a diagram illustrating an example of a program-related information display indicated in a currently received program according to the embodiment of the invention.
FIGS. 5A and 5B are diagrams each illustrating an example of a program-related information display indicated while a program recorded in the past is reproduced according to the embodiment of the invention.
FIG. 6 is a diagram illustrating an example of a program-related information display indicated during a program recorded in the past is reproduced according to the embodiment of the invention.
FIG. 7 is a flowchart illustrating an example of a flow of a program-related information display generating/indicating process.

### DETAILED DESCRIPTION

An embodiment according to the present invention will be described in detail with reference to the accompanying drawings. The scope of the claimed invention should not be limited to the examples illustrated in the drawings and those described below.

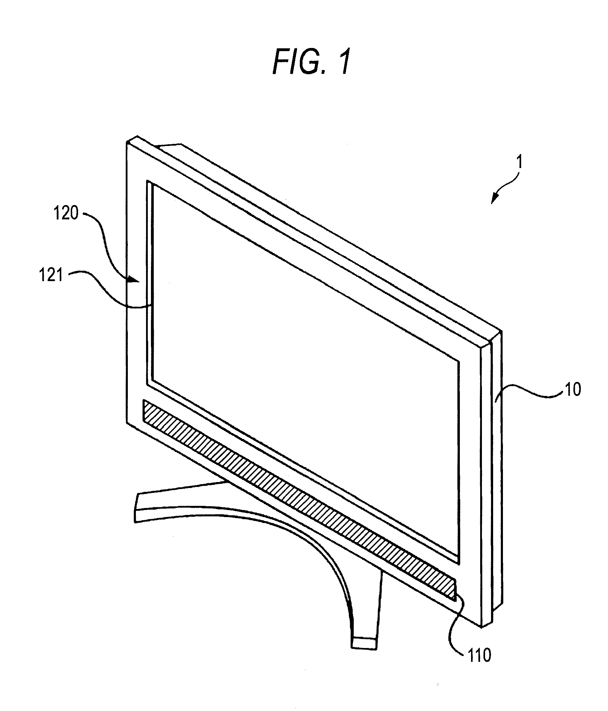

FIG. 1 is a schematic perspective diagram illustrating an example of the external appearance of a digital television set 1 including an electronic apparatus according to the embodiment of the invention. Incidentally, in the following description of the present embodiment, the case of mounting an electronic apparatus according to the invention in a digital television set is described. However, the invention is not limited thereto. The electronic apparatus according to the invention can be applied to a broadcast receiving apparatus, a portable telephone with a broadcast receiving function, a video recording apparatus in which a broadcast receiving apparatus is mounted, a personal computer (PC), and the like. The invention can be applied not only to the case of broadcasting programs due to broadcast waves distributed by being propagated in the air, but to the case of broadcasting programs by the Internet protocol (IP) broadcast or the like distributed via the wired or wireless Internet.

This digital television set 1 includes a main body 10 that houses electronic devices, e.g., tuners, an audio amplifier, and a signal processor, a display unit 120 having a liquid crystal display (LCD), and a speaker 110 for outputting audio. The digital television set 1. is provided with electric power via a plug (not shown), and receives terrestrial digital broadcast waves via an antenna which is described below. Then, the received terrestrial digital broadcast wave signals are decoded by the signal processor 100. Thus, the digital television set 1 outputs video signals and audio signals. The display unit 120 processes the decoded video signals and displays videos. The speaker 110 processes the audio signals and outputs audio.

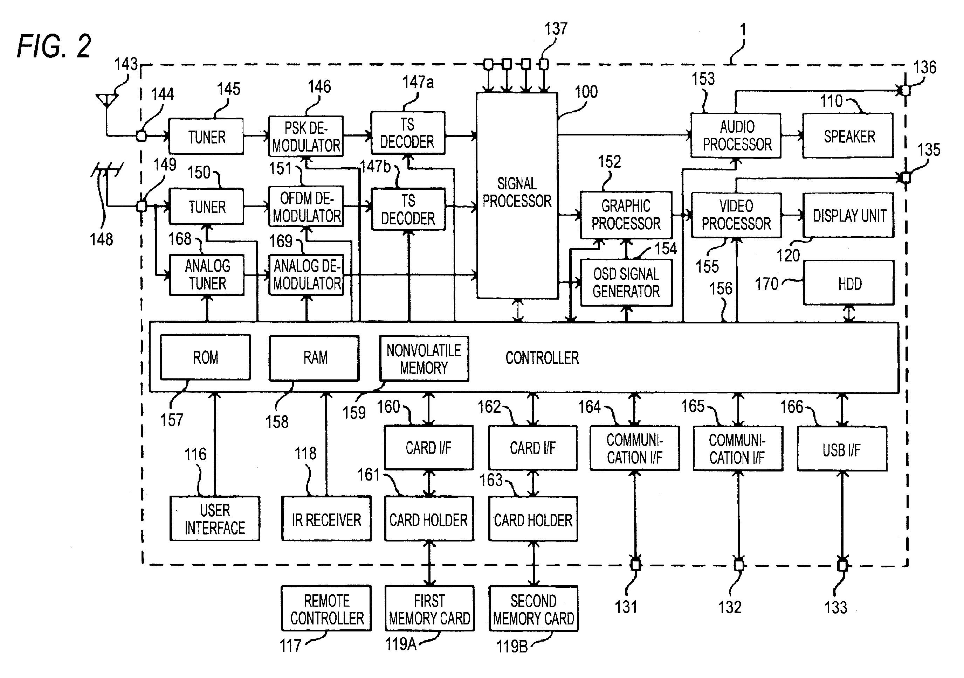

FIG. 2 is a block diagram illustrating an example of the configuration of the digital television set 1 according to the present embodiment.

This digital television set 1 includes a controller 156 for controlling various components provided in the apparatus. The controller 156 incorporates a processor such as a central processing unit (CPU) and the like. The controller 156 activates a system control program and various processing programs preliminarily stored in a read-only memory (ROM) 157 according to an operation signal input from a user interface 116 and to an operation signal that is transmitted from a remote controller 117 and received via an IR receiver 118. The controller 156 controls an operation of each portion of the apparatus according to the activated programs using a random access memory (RAM) 158 as a work memory. Various types of setting information, control information, and the like necessary for controlling an operation of each portion of the apparatus are stored in, e.g., a nonvolatile memory 159.

The digital television set 1 is configured to be able to receive broadcasts of various types, e.g., terrestrial analog broadcast, terrestrial digital broadcast, broadcast satellite (BS) digital broadcast, communication satellite (CS) digital broadcast, and the like. The digital television set 1 includes a hard disk drive (HDD) 170 capable of recording programs supplied from stations of these broadcasts.

An antenna 143 for receiving BS/CS digital broadcasts receives satellite digital television broadcast signals. The received digital broadcast signals are supplied via an input terminal 144 to a tuner 145 for satellite digital broadcasts. The tuner 144 performs the tuning of the received digital broadcast signals and transmits the tuned digital broadcast signals to a phase shift keying (PSK) demodulator 146. The PSK demodulator 146 performs demodulation of a transport stream (TS) and supplies the demodulated TS to a TS decoder 147a. The TS decoder 147a decodes the TS into digital video signals and audio signals. Then, the TS decoder 147a outputs the digital video signals and the audio signals to the signal processor 100.

An antenna 148 for terrestrial digital broads receives terrestrial digital television broadcast signals. The received digital broadcast signals are supplied via an input terminal 149 to a tuner 150 for terrestrial digital broadcasts. In the present embodiment, the tuner 150 for terrestrial digital broadcasts includes eleven tuners (in FIG. 2, the eleven tuners are collectively depicted as a single tuner 150). The tuners 150 performs turning of the received digital broadcast signals and transmits the tuned digital broadcast signals to orthogonal frequency division multiplexing (OFDM) demodulators 151. The OFDM demodulators 151 demodulate TSs and supply the demodulated TSs to TS decoders 147b. The TS decoders 147b decode TSs into digital video signals and audio signals. Then, the TS decoders 147b output the digital video signals and the audio signals to the signal processor 100. The number of the OFDM demodulators 151 is eleven and equal to the number of the tuners 150, so that the OFDM demodulators 151 are allocated one-to-one to the tuners 150, respectively. Also, the number of the TS decoders 147b is eleven and equal to the number of the tuners 150, so that the TS decoders 147b are allocated one-to-one to the tuners 150, respectively. The eleven terrestrial digital television broadcast waves received by the eleven tuners 150 are simultaneously demodulated by the plurality of OFDM demodulators 151, and the demodulated waves are simultaneously decoded by the TS decoders 147b into video signals and audio signals. Then, the video signals and the audio signals are output therefrom to the signal processor 100.

The antenna 148 can receive also terrestrial analog broadcast signals. The received terrestrial analog broadcast signals are distributed by a distributor (not shown), and supplied to an analog tuner 168. The analog tuner 168 performs the tuning of the received analog broadcast signals and transmits the tuned analog broadcast signals to an analog demodulator 169. The analog demodulator 169 demodulates analog broadcast signals and outputs the demodulated analog broadcast signals to the signal processor 100. Users can view common antenna television (CATV) programs with the digital television set 1 by connecting a tuner for CATV to, e.g., an input terminal 149 to which the antenna 148 is connected.

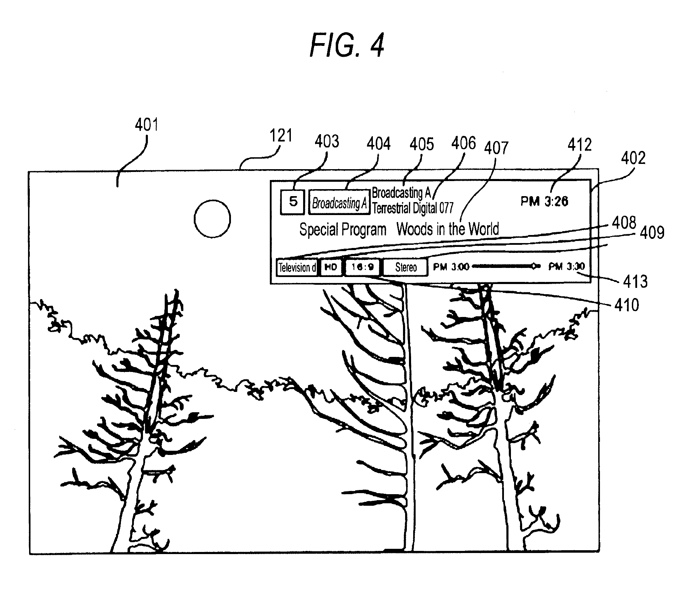

The signal processor 100 performs appropriate digital signal processing on digital broadcast signals output from the TS decoders 147a and 147b. The digital broadcast signals are grouped into data signals, video signals, and audio signals. The data signals include program-related information which is various information concerning broadcasted programs. There are various types of information indicated by a program-related information display illustrated in FIGS. 4 to 6 as program-related information included by the data signals. The signals grouped into the video signals are output to a graphic processor 152. The audio signals are output to an audio processor 153. The signal processor 100 converts broadcast signals output from an analog demodulator 169 into video signals and audio signals in predetermined digital formats. The digital video signals obtained by the conversion are output to the graphic processor 152. The digital audio signals obtained by the conversion are output to the audio processor 153. The signal processor 100 performs predetermined digital signal processing on signals input from a line input terminal 137.

An on-screen display (OSD) signal processor 154 generates, under the control of the controller 156, an OSD signal for displaying a user interface (UI) screen and the like. The data signals separated in the signal processor 100 from the other digital broadcast signals are converted by the OSD signal generator 154 into OSD signals of an appropriate format. The OSD signal obtained by the conversion is output by the OSD signal generator 154 to the graphic processor 152. The OSD signal generator 154 receives signals which relate to a program-related information display that is generated by a program-related information display generator (to be described below) and that corresponds to a displayed program and which are used for displaying the program-related information display. Then, the OSD signal generator 154 combines the program-related information display, the UI screen, and an image representing a currently viewed program with one another and outputs a resultant image to the graphic processor 152.

The graphic processor 152 performs decoding processing on the digital video signals output from the signal processor 100. The decoded video signal is combined with the OSD signal output from the OSD signal generator 154 by being made to overlap therewith. Then, the combined signals are output to the video processor 155. The graphic processor 152 can selectively output the decoded video signal or the decoded OSD signal to the video processor 155.

The video processor 155 converts signals output from the graphic processor 152 into analog video signals of a format that can be displayed by the display unit 120. The analog video signals obtained by the conversion are output to the display unit 120 and displayed on a display screen 121 thereof. The video processor 155 can output video signals to an external apparatus such as a HDD recorder or the like connected to an external output terminal 135.

The audio processor 153 converts input audio signals into analog audio signals of a format which can be displayed by the display unit 120. The analog audio signal obtained by the conversion is output to and reproduced by the speaker 110. The audio processor 153 can output audio signals to an external apparatus, such as an amplifier, connected to an external output terminal 136.

A card holder 161 is connected to the controller 156 via a card interface (I/F) 160. A first memory card 119A can be attached to this card I/F 160. The first memory card 119A is a storage medium, e.g., a secure digital (SD) memory card, a multimedia card (MMC), or a compact flash (CF) card. The first memory card 119A attached to the card holder 161, and the controller 156 can transmit information via the card I/F 160. The controller 156 can cause the first memory card 119A to store data such as an image, a piece of music and a broadcast program. The controller 156 can read the data representing the image, the piece of music, the broadcast program, and the like and can cause the display unit 120 to display the read data, and cause the speaker 110 to output audio.

A card holder 163 is connected to the controller 156 via a card I/F 162. A second memory card 119B can be attached to this card I/F 162. The second memory card 119B is a storage medium for storing, e.g., contract information concerning broadcast reception contracts. The second memory card 119B attached to the card holder 163, and the controller 156 can transmit information via the card I/F 160.

A first local area network (LAN) terminal 131 is connected to the controller 156 via a communication I/F 164. The first LAN terminal 131 is used as a port dedicated to a HDD which is compatible with a LAN using an Ethernet (registered trademark). When a LAN-compatible HDD is connected to the first LAN terminal 131 as a network attached storage (NAS), the HDD and the controller 156 can transmit information via the communication I/F 164. In this case, the controller 156 functions as a dynamic host configuration protocol (DHCP) server and controls the LAN-compatible HDD connected to the first LAN terminal 131 by allocating an Internet protocol (IP) address to the LAN-compatible HDD.

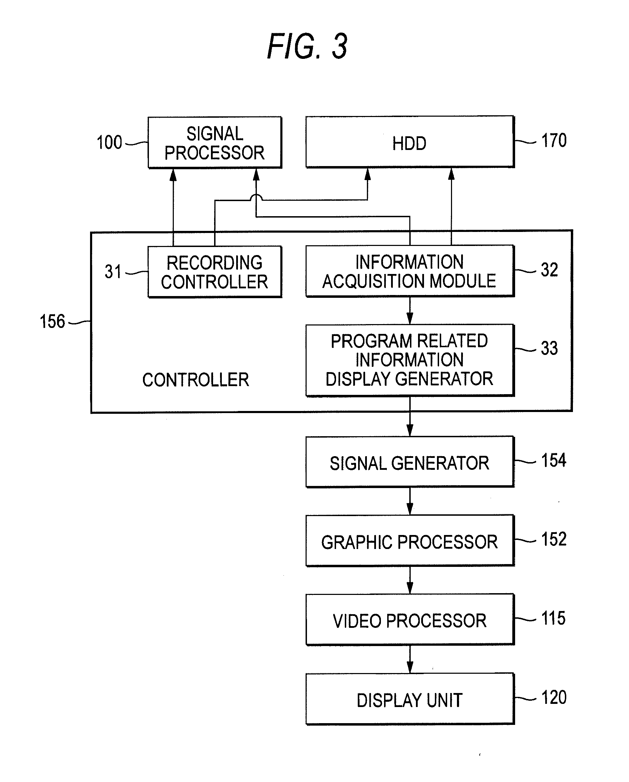

The controller 156 stores data representing images, pieces of music, and broadcast programs in the HDD. The controller 156 reads the data representing the images, the pieces of music, the broadcast programs, and the like, and cause the display unit 120 to display the data and cause the speaker 110 to output audio. The first LAN terminal 131 serving as the port dedicated to the LAN-compatible HDD is provided in the television set 1. Consequently, information representing a program with high-definition television picture quality can stably be recorded in the HDD without being affected by other factors of network environment and the status of use of a network. The controller 156 can reproduce the recorded program from the storage medium, e.g., the HDD, cause the display unit 120 to display the program and cause the speaker 110 to output audio. When the recorded program is reproduced, the controller 156 can perform the reproduction according to one of a first reproducing method and a second reproducing method which are described below. Thus, the controller 156 controls reproduction processing. The controller 156 has a configuration which is described below with reference to FIG. 3.

A second LAN terminal 132 is connected to the controller 156 via a communication I/F 165. The second LAN terminal 132 is used as a general port which is compatible with a LAN using an Ethernet (registered trademark). Devices, such as a LAN-compatible HDD, a personal computer (PC), and a digital versatile disk (DVD) recorder incorporating a HDD, are connected to the second LAN terminal 132. The devices connected to the second LAN terminal 132, and the controller 156 can transmit information via the communication I/F 165. When a broadband router is connected to the second LAN terminal 132 via a hub, the controller 156 can be connected via the broadband router to a network, e.g., the Internet. A PC and a portable telephone are connected to this network. Thus, information can be transmitted between the controller 156 and the digital television set 1.

Storage media, such as a hard disk and a DVD (optical disk), can be attached via the communication I/F 165 to the devices, such as the HDD, the PC, and the DVD recorder. The controller 156 can cause the storage media to store data representing images, pieces of music, and broadcast programs via the hub and a device connected to the hub. The controller 156 can read the data, such as the image, the piece of music, and the broadcast program, stored in the storage media, and can cause the display unit 120 to display the read data and cause the speaker 110 to output audio.

A universal serial bus (USB) terminal 133 is connected to the controller 156 via a USB I/F 166. The USB terminal 133 is used as a general USB-compatible port. A portable telephone, a digital camera, a card reader/writer for various types of memory cards, a HDD, a keyboard, and the like are connected to the USB terminal 133 via, e.g., a hub. The controller 156 can transmit information between the controller 156 and each device connected thereto via the USB terminal 133.

FIG. 3 is a block diagram illustrating an example of the configuration of functional blocks concerning a program-related information display of the digital television set 1 according to the present embodiment of the invention. FIG. 3 illustrates the signal processor 100, the HDD 170, the controller 156, the OSD signal generator 154, the graphic processor 152, the video processor 155, the display unit 120, a recording controller 31, an information acquisition module 32, and a program-related information display generator 33.

The recording controller 31 is a part of the configuration of the controller 156 and controls the broadcast program recording function of the digital television set 1. The recording of a broadcast program is performed, based on a broadcast recording instruction sent from a user's remote controller 117 or the like. When a broadcast program is recorded, the recording controller 31 causes the HDD 170 to store data signals, video signals and audio signals received by the signal processor 100.

According to the present embodiment, the recording controller 31 is configured to be capable of selectively performing recording processing in one of two recording methods. One of the recording methods is a first recording method of recording a single broadcast program which can be received from a single broadcast wave during a predetermined time period which is preliminarily reserved, or during a broadcasting time of a predetermined program. Another recording method is a second recording method of simultaneously, in parallel, recording a plurality of broadcast programs that can be received from a plurality of broadcast waves (thus, physical channels), which are being broadcasted in a predetermined time period at substantially the same time. When the programs are recorded according to the second recording method, data signals, the recording controller 31 causes the HDD 170 to simultaneously, in parallel, store video signals, and audio signals included by a plurality of broadcast waves which are received from, e.g., the antenna 148 for receiving a terrestrial digital broadcasts, and which are received by the plurality of tuners 150, and also received by the signal processor 100 from the plurality of broadcast waves. In addition, the recording controller 31 causes the HDD 170 to store recording method information that indicates which of the first recording method and the second recording method is used to record a moving image, and that is associated with recording-information represented by the data signals, the video signals and the audio signals.

Additionally, the recording controller 31 generates when a program is recorded, a recording clock-time table indicating correspondence relationship between a recording clock-time, at which the program is recorded, and information indicating a position of data representing each of video signals and audio signals in a program recorded at the recording clock-time. More specifically, the recording clock-time table is a table in which information indicating a recording clock-time, e.g., 04/03 10:14:32 a.m. is associated with a video signal and an audio signal representing a location in a program recorded at the recording clock-time 04/03 10:14:32 a.m.

According to the present embodiment, in the digital television set 1, a storage destination for storing recorded information at the recording clock-time is the HDD 170. However, the storage destination therefor according to the invention is not limited thereto. The recorded information can be stored in an external storage medium, such as a DVD, an external HDD, and a secure digital (SD) memory card, for the digital television set 1 via various interfaces. Alternatively, the recorded information can be stored in another storage medium provided in the digital television set 1.

The information acquisition module 32 is one of components included in the controller 156 and has a function of a program-related information reception module that receives various types of information to be used by the digital television set 1 when an electronic program table is generated. When the digital television set 1 generates a program-related information display according to a user's instruction, the information acquisition module 32 receives data signals (or program-related information) and recording method information concerning programs, whose related information display is to be generated, from the signal processor 100 or the HDD 170 in order to generate a program-related information display. In the present embodiment, the information acquisition module 32 receives data signals relating to a currently received program from the signal processor 100, and receives data signals and recording method information in the case of reproducing a program recorded in the past from the HDD 170. In the description of the present embodiment, it has been exemplified that an acquisition source (input source) from which the data signals concerning a currently received program are received by the information acquisition module 32 is the signal processor 100, and that an acquisition source (input source) from which the data signals concerning a program recorded in the past are received by the information acquisition module 32 is the HDD 170. The source can be an external storage medium, such as a DVD, an external HDD or an SD memory card, and another storage medium provided in the digital television set 1. A recorded moving image can be recorded by an electronic apparatus other than the digital television set 1. When receiving various types of information, the information acquisition module 32 transmits data signals, recording method information, and information representing a module (e.g., a LAN, a USB, a memory card) of the source, from which the data signals are received or input, to the program-related information display generator 33. The information acquisition module 32 has a system-clock and transmits also a signal representing a current time-and-date to the program-related information display generator 33.

The program-related information display generator 33 is a part of the configuration of the controller 156 and has a function of generating a program-related information display to be displayed by the digital television set 1. The program-related information display generator 33 receives data signals, recording-method information, information concerning a source module from which the data signals are received, and current time information from the information acquisition module 32. The program-related information display generator 33 generates signals concerning a program-related information display, based on the received information. The program-related information display generator 33 transmits signals concerning the generated program-related information display to the OSD signal generator 154. The OSD signal generator 154 generates OSD signals based on the signal concerning the received program-related information display and outputs the generated OSD signals to the graphic processor 152. When receiving the OSD signals, the graphic processor 152 combines the OSD signal representing a program-related information display with a signal representing a moving image to be displayed (i.e., a moving image concerning the generated program-related information display) so as to superimpose the moving image on the program-related information display. The program-related information display generator 33 outputs the combined signals to the video processor 155. The video processor 155 causes the display unit 120 to indicate a program-related information display, based on the signal input thereto.

FIG. 4 is a diagram illustrating an example of a program-related information display indicated in a currently received program according to the present embodiment of the invention. FIG. 4 illustrates the following regions, i.e., a display screen 121, a broadcast program 401, a program-related information display 402, an allocated channel 403, a station logo 404, a broadcast station name 405, a three-digit channel 406, a program name 407, a broadcasting method 408, a resolution 409, an aspect ratio 410, an audio mode 411, a current time 412, and a program time bar 413.

The broadcast program 401 is a currently broadcasted program (currently received program) and is displayed on the entire display screen 121.

The program-related information display 402 indicates various types of information concerning the broadcast program 401. The program-related information display 402 indicates the following elements, i.e., the allocated channel 403, the station name 405, the three-digit channel 406, the program name 407, a broadcasting method 408, the resolution 409, the aspect ratio 410, the audio mode 411, the current time 412, and a program time bar 413. The program-related information display 402 is indicated so as to be superimposed on the indication of the broadcast program 401. According to the present embodiment, a part of the broadcast program 401 is hidden, so that a part of the broadcast program 401 cannot be seen. However, e.g., the program-related information display 402 is semitransparently shown such that a user can check the whole image of the broadcast program 401.

The allocated channel 403 indicates a channel allocated to a broadcast station designated by the broadcast station name 405 in the digital television set 1 so that a user can easily performs an operation of selecting a broadcast station in the digital television set 1.

The station logo 404 indicates a logo mark of the broadcast station designated by the broadcast station name 405.

The broadcast station name 405 indicates the name of the broadcast station broadcasting the broadcast program 401.

The information three-digit channel 406 indicates the type of broadcast waves, such as "terrestrial digital broadcast waves", "BS broadcast waves" and "CS broadcast waves", and a channel number officially allocated to each broadcast station.

The program name 407 represents the name of the program indicated by the broadcast program 401. Although the name of the program indicated by the "broadcast program" 401 is indicated according to the present embodiment, the elements indicated according to the invention is not limited thereto. Additionally, other elements, such as the name of each performer of the program, and contents of the program, relating to the broadcast program 401, or combinations of such regions can be displayed.

The broadcasting method 408 represents a method of broadcasting the broadcast program 401. The indication "television d" represented by the broadcasting method 408 indicates that the broadcasting method of the broadcast represented by the region broadcasting program 401 is a digital broadcast. Additionally, the indication "television a" represents that the broadcasting method of the broadcast represented by the broadcasting program 401 is an analog broadcast.

The resolution 409 denotes a resolution of the broadcast program 401. The indication "HD" denoted by the region resolution 409 indicates that the broadcast program 401 is a high-definition broadcast. In addition, the indication "SD" is an abbreviation of the expression "standard definition" and indicates that the broadcast program 401 is a standard definition image quality broadcast.

The aspect ratio 410 represents an aspect ratio defined as a ratio in length of a longer side to a shorter side of an image of the broadcast program 401.

The audio mode 411 indicates an output format of audio output from the broadcast program 401. In addition to the indication "stereo", the indication "monaural" and the like can be used as the indication of the audio mode 411.

The current time 412 indicates a current clock-time. According to the present embodiment, the current time 412 is displayed at the upper right side of the program-related information display 402 in the present embodiment.

The program time bar 413 is an indication enabling a user to intuitively recognize what time has elapsed between a currently displayed point in time and the start time of a broadcast program 401, in comparison with the whole broadcast program. The start time of a broadcast program 401 is displayed at the left end of the program time bar 413. The end time of the broadcast program is displayed at the right end of the program time bar. A bar and a slider are displayed therebetween. A straight segment illustrated as extending sideways is a bar. A rhombic indication illustrated at the near side of the bar is a slider. At the start of a broadcast program 401, the slider is placed at the left end of the bar. With the lapse of time, the slider moves on the bar from the left end to the right end. At the end of the broadcast program 401, the slider is moved to the right end of the bar.

When the display of the program time bar 413 is generated, the program-related information display generator 33 first receives from the information acquisition module 32 data signals including information on the current point in time, and the start and the end of the broadcast program. Then, a position, at which the slider for indicating the relative position of the currently indicated location with respect to the entire program is displayed, is determined on the basis thereof data obtained from the received data signals.

In the foregoing description of the present embodiment, the above information displayed as the program-related information display 402 has been exemplified. However, the program-related information display is not limited thereto. Such information can freely be selected or deleted for the convenience of a screen configuration, a display space and the like.

Thus, when the program-related information display 402 is displayed while a currently received program is displayed, program-related information display 402, a user can intuitively grasp information concerning the display indicated by the digital television set 1. This facilitates a user's selection of a channel which the user wishes to view.

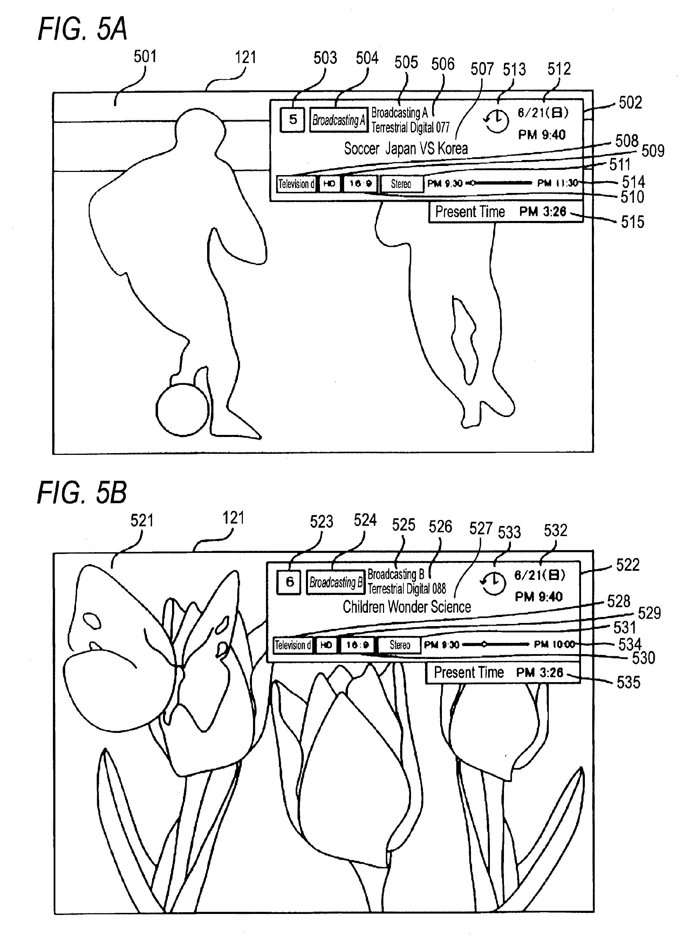

FIGS. 5A and 5B are diagrams each illustrating an example of a program-related information display indicated while a program recorded in the past is reproduced according to the present embodiment of the invention. FIGS. 5A and 5B each illustrate a program-related information display indicated while a program recorded by the above second recording method is reproduced. There are two reproducing methods for reproducing a program recorded by the second recording method. The above two reproducing methods are a first reproducing method to select one of programs recorded in parallel and to reproduce the selected program, and a second reproducing method to reproduce programs simultaneously recorded in parallel by switching the program to be viewed among the programs in response to a user's zapping operation, so that the user feels as if the programs were broadcasted similarly to the past in which the programs were recorded. In the case of employing the second reproducing method, when the currently reproduced program is switched to the program broadcasted at another broadcast station, reproduction of the latter program is started from a position corresponding to a clock-time at which the last reproduced image of the program hitherto viewed is recorded. Thus, a zapping operation can be performed at a given time point in the past using the program-related information concerning the programs recorded in the past. Consequently, when the program is reproduced by the second reproducing method, a user can feel as if the user switched among the reproduced programs simultaneously recorded in parallel while the programs are simultaneously reproduced. In addition, the user can feel as if he went back to the past and performed a zapping operation on the digital television set 1.

The case of reproducing the recorded programs using the second reproducing method according to the present embodiment is described with reference to FIGS. 5A and 5B.

FIGS. 5A and 5B are diagrams each illustrating an example of a program-related information display indicated while a program recorded in the past is reproduced according to the present embodiment of the invention. Description of components of the present embodiment, which is redundant with those of the first embodiment, is omitted.

FIG. 5A illustrates an example of the display screen 121 when a recorded program is reproduced, which is recorded by the second recording method and reproduced by the second reproducing method. FIG. 5B illustrates an example of the display screen 121 when a user switches a channel by performing a zapping operation during the program is reproduced by the second reproducing method.

As illustrated in FIG. 5A, a recorded program 501 and a program-related information display 502 are displayed on the display screen 121. The program-related information display 502 includes the following elements, i.e., an allocated channel 503, a station logo 504, a broadcast station name 505, a three-digit channel 506, a program name 507, a broadcasting method 508, a resolution 509, an aspect ratio 510, an audio mode 511, a recording clock-time 512, a recording clock-time mark 513, a recording time bar 514, and a current clock-time 515. However, the allocated channel 503, the station logo 504, the broadcast station name 505, the three-digit channel 506, the program name 507, the broadcasting method 508, the resolution 509, the aspect ratio 510, and the audio mode 511 are substantially similar to the associated elements described with reference to FIG. 4. Thus, the description of these elements is omitted. FIG. 5A illustrates the contents of the recorded program 501.

Information representing a recording time and date, at which the recorded program 501 is recorded, is displayed on the "recording clock-time" 512. A recording clock-time, at which a time point displayed in the recording program 501 on the display screen 121 is recorded, is indicated as the "recording time". Information representing the recording clock-time is included in a data signal. The program-related information display generator 33 generates a display of the recording clock-time 512 using a data signal received from the information acquisition module 32. The data signal includes a time offset table (TOT) serving as table information, in which the clock-time information is associated with a location indicated by each of a video signal and an audio signal of a program broadcasted at this clock-time. When the program-related information display generator 33 generates a display of the recording clock-time 512, this time offset table (TOT) is referred to. Alternatively, this display can be generated by referring to a recording clock-time table generated by the recording controller 31.

In the technical field of the terrestrial digital broadcast in Japan, a time-and-date table (TDT), and a time offset table (TOT) including offset time information used for effecting daylight-saving time are determined as program arrangement information tables in conformity of standards ARIB STD-B10 of the association of radio industries and businesses (ARIB). A current date and a current time based on Japan Standard Time (JST (= Universal Time Coordinated (UTC)) + 9) and modified Julian date (MJD) are transmitted utilizing these tables.

According to operational regulations ARIB TR-B14 for the terrestrial digital broadcast in Japan, 5 seconds are determined as a default cycle for transmitting a time offset table (TOT). Thus, the TOT is transmitted once every 5 seconds.

In the program-related information display 502 for a program reproduced by the second reproducing method illustrated in FIG. 5, a location of the recoding clock-time 512 in the program-related information display 502 is displayed at a position similar to that of the current clock-time 412 in the program-related information display 402 illustrated in FIG. 4.

The recording clock-time mark 513 is used for facilitating users to recognize that the recording clock-time 512 is not a current clock-time but a clock-time at which a program is recorded. In the foregoing description of the present embodiment, it has been exemplified that a clock-like mark whose clock hand is rotated counterclockwise is used as the recording clock-time mark. However, the recording clock-time mark according to the invention is not limited thereto. As long as a mark enables a user to recognize that the recording clock-time 512 differs from the current clock-time, any mark can be used as the recording clock-time mark 513. According to the present embodiment, the recording clock-time 512 and the recording clock-time mark 513 are arranged side-by-side. However, the arrangement of the recording clock-time 512 and the recording clock-time mark 513 according to the invention is not limited thereto. The recording clock-time mark 513 can be displayed at another position close to the recording clock-time 512. Alternatively, the recording clock-time mark 513 can be superimposed below the recording clock-time 512 and displayed in the rear of the recording clock-time 512.

The recording time bar 514 is an indication for allowing a user to intuitively recognize a time at which the program 501 is recorded and what time has elapsed between a currently displayed point in time and the start time of a broadcast program, in comparison with the whole broadcast program. The start time of a recorded program 501 is indicated at the left side of the recording time bar 514, while the end time of the program 501 is indicated at the right side of the recording time bar 514. The bar and the slider are displayed between the indications of the start time and the end time. The recording time bar 514 is generated by referring to information representing the start time and the end time of the program, and the time offset table (TOT).

The current clock-time 515 indicates a current clock-time. Users can check the current clock-time by seeing the indication of the current clock-time 515.

FIG. 5B illustrates the display screen 121 at the time of switching the digital television set 1 by a user's zapping operation during the program is reduced by the second producing method, as described above. In a case where a recorded program is reproduced in the digital television set 1 when a user performs zapping operation with a remote controller 117, the digital television set 1 displays recorded programs that correspond to a destination channel and that are recorded in parallel. In this case, the digital television set 1 starts reproduction of a recorded program corresponding to a destination channel from a recording clock-time subsequent to the reproduction of the program corresponding to a channel just before the switching. Thus, even when the switching of the channel is performed, the displayed recording clock-time is continuous from, or substantially continuous from the end of the reproduction of the program corresponding to the channel just before the switching. The recording clock-time is displayed similarly to the current clock-time. The recording clock-time corresponding to the destination channel is continuous to that corresponding to the channel just before the switching.

According to the present embodiment, in each of the program-related information displays 502 and 512 generated corresponding to the second reproducing method, an associated one of the current clock-times 515 and 534 is displayed (at a position differing from an associated one of the recording clock-times 512 and 532) while displaying an associated one of the recording clock-times 512 and 532. Thus, a user can check the current clock-time without misunderstanding that the currently reproduced program is presently broadcasted, while the user feels as if the user went back to the past.

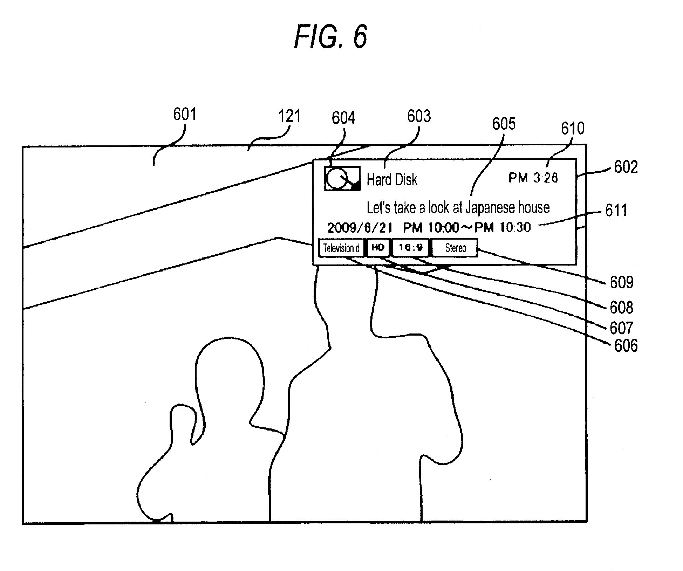

FIG. 6 is a diagram illustrating an example of a program-related information display indicated while a program recorded in the past is reproduced according to the present embodiment of the invention. FIG. 6 illustrates a program-related information display 602 in a case where a program recorded by the above first recording method is reproduced, or where a program recorded by the above second recording method is reproduced by the first reproduced. Description of elements of the program-related information display, which are redundant with those of the above program-related information display, with reference to FIG. 6 is omitted. The following description is focused on the differences between the program-related information displays.

A program-related information display 602 represents information concerning a recorded program 601, more specifically, an input destination display 603, an input destination mark 604, a program name 605, a broadcasting method 606, a resolution 607, an aspect ratio 608, an audio mode 609, a current clock-time 610, and a recording time 611.

The input destination display 603 displays an input destination module to which a recorded program 601 is input. According to the present embodiment, recorded moving images stored in the HDD 170 are displayed. Thus, the term "HARD DISK" is displayed on the "input destination display" 603. According to the present embodiment, recorded moving images are received from the HDD 170. Then, the received moving images are reproduced. However, as described above, the input destination module according to the invention is not limited. When moving images are received from, e.g., a LAN terminal, a USB terminal, or an external SD card, the expressions "LAN", "USB", and "memory card" are displayed on the region "input destination display" 603.

The input destination mark 604 indicates a module denoted by the input destination display 603 with a simply pictorial mark so as to enable a user to intuitively grasp the input destination module.

A display position of the current clock-time 610 in the program-related information display 602 differs from that of the current clock-time 515 in the program-related information display 502 using the second reproducing method illustrated in FIG. 5, and is similar to that of the current clock-time 412 in the program-related information display 402.

The recording time 611 indicates a time period from a start time and date, at which the recorded program 601 is recorded, to an end time.

The program-related information display 502 corresponding to the recorded program 501 which is recorded by the second recording method and reproduced by the second reproducing method illustrated in FIG. 5, and the program-related information display 402 corresponding to the broadcast program 401 which is a currently broadcasted illustrated in FIG. 4, are displayed in substantially the same format. As is understood by the comparison between FIGS. 4 and 5, the recording clock-time 512 is displayed, instead of the current clock-time 412 illustrated in FIG. 4. Thus, the current clock-time 515, which represents a current clock-time, is displayed at a different position.

The program-related information display 602 corresponding to the recorded program 601 to be reproduced by the first reproducing method illustrated in FIG. 6, the program-related information display 502 corresponding to the recorded program 501 to be reproduced by the second recording method illustrated in FIG. 5 and to be reproduced by the second reproducing method, and the program-related information display 402 corresponding to the recorded program 401 which is currently broadcasted and illustrated in FIG. 4, differ from each other in the display format.

The program-related information display 502 illustrated in FIG. 5 indicates information concerning the broadcast station (the allocated channel 503, the station logo 504, the broadcast station name 505, and the three-digit channel 506), the recording clock-time 512, and the bar representing the elapsed time of the program (the recording time bar 514), similarly to the program-related information display 402. However, such information is not displayed in the program-related information display 602 illustrated in FIG. 6, in which information on modules (the input destination display 603 and the input destination mark 604) for inputting information on the recorded program 601.

When a program recorded by the second recording method and reproduced by the second reproducing method is displayed, a user can perform a zapping operation on a plurality of programs simultaneously recorded. When a zapping operation is performed, if the recording clock-times 512 and 532 are not displayed, the potential axes cannot be grasped. Thus, it cannot be grasped what clock-time at which each program performs a display is. Consequently, users cannot view while feeling as if the user went back to the past. In a case where the programs do not indicate what broadcast station (or channel) each of the programs corresponds to, a user cannot recognize the broadcast station even when performing zapping.

In a certain time, the number of television programs broadcasted by a certain broadcast station is 1. Therefore, if a user grasps information representing a time period in which a program is broadcasted, and a broadcast station which broadcasts the program, the user can recognize the program uniquely. In a case where a program recorded by the second recording method and reproduced by the second reproducing method, when information representing the recording clock-time and the broadcast station broadcasting the program is displayed as the program-related information display, a user can view the program with the digital television 1 by performing zapping while feeling as if the user went back to the past.

In a case where a program is reproduced in the present embodiment by the first reproducing method, a zapping operation cannot be performed. Thus, information on the recording clock-time and the broadcast station is particularly unnecessary. In this case, it is useful for users to display information indicating from what modules a video is input, instead of information representing the recording clock-time and the broadcast station. Accordingly, information on an input destination, such as program-related information 601, is displayed.

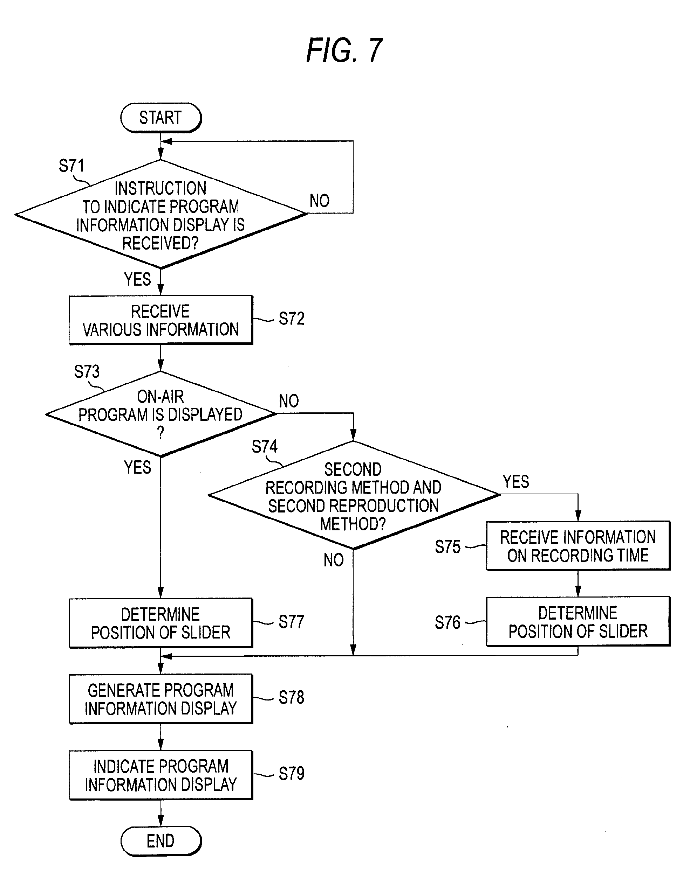

FIG. 7 is a flowchart illustrating an example of a flow of a program-related information display generating/indicating process.

First, in step S71, the apparatus waits for reception of an instruction (e.g., a user depresses a predetermined button of the remote controller 117 to indicate program-related information) from the user's remote controller 117 or the like to indicate a program-related information display. At that time, the instruction to indicate program-related information display includes an instruction to indicate a program. According to the present embodiment, when a program is displayed, the digital television set 1 first displays a program-related information display (regardless of whether the program is being broadcasted or is recorded). If an instruction to indicate a program-related information display is not received (No in step S71), a process flow returns to step S71. Thus, loop processing is performed until an instruction to indicate a program-related information display is received.

If a program-related information display is received (YES in step S71), the information acquisition module 32 receives various types of information in step S71. At that time, according to the present embodiment, if the displayed program is currently being received, the information acquisition module 32 receives a data signal from the signal processor 100. If the displayed program is a recorded program, the information acquisition module 32 receives data signals, and recording method information from the HDD 170. In the foregoing description of the present embodiment, it has been exemplified that the source of the recorded program is HDD 170. However, as described above, data signals and recording method information can be received from an external apparatus via another module. Alternatively, data signals and recording method information can be received from another storage medium provided in the digital television set 1. The information acquisition module 32 transmits the data signals, the recording method information, information source module information, and time information to the program-related information display generator 33.

When receiving the above various types of information from the information acquisition module 32, in step S73, the program-related information display generator 33 determines according to the information source module information whether the program to be displayed is currently received, or a recorded program. At that time, if the information acquisition module 32 receives a data signal from the signal processor 100, the program-related information display generator 33 determines that the digital television set 1 displays the currently received broadcast program. If the data signal is received from a module other than the signal processor 100, the program-related information display generator 33 determines that the digital television set 1 displays the recorded program.

If the program-related information display generator 33 determines that the digital television set 1 does not display the currently broadcasted program (NO in step S73), the program-related information display generator 33 receives information indicating whether the reproducing method for the recorded program is the first reproducing method or the second reproducing method. Because the reproducing processing is performed by the controller 156, the program-related information display generator 33 receives, from the controller 156, information representing which of the reproducing methods is used to perform reproduction. In step S74, the program-related information display generator 33 determines, based on the recording method information received from the information acquisition module 32 and the reproducing method information received from the controller 156, whether the recording method for the recorded program is the second recording method, and the reproducing method is the second reproducing method.

If the recorded program to be displayed is recorded by the second recording method, and the reproducing method is the second reproducing method (Yes in step S74), in step S75, the program-related information display generator 33 receives information representing a recording clock-time corresponding to a displayed location of the recorded program, a start clock-time and an end clock-time of the recorded program from a data signal received from the information acquisition module 32. In step S76, the program-related information display generator 33 determines the position of the slider of the recording time bar. At that time, information representing the recording time can be received from the time offset table (TOT) included by the data signal. Alternatively, the information representing the recording time can be received utilizing a recording clock-time table generated by the recording controller 31.

If the program displayed in step S73 is a program currently broadcasted (or received) (YES in stepS73), in step S77, the program-related information display generator 33 determines the position of the slider of the program time bar 413 based on information representing the start time and the end time of the recorded program and the current clock-time, which are included in the data signal received from the information acquisition module 32.

If the recorded program to be displayed is not recorded by the second recording method, and the reproducing method is not the second reproducing method (NO in step S74), or after processing in step S76 or S77 is finished, in step S78, the program-related information display generator 33 generates a program-related information display, based on the data signal received from the information acquisition module. At that time, the display formats respectively corresponding to the following three cases and to FIGS. 4 to 6 differ from one another, i.e., whether the moving image to be displayed is currently broadcasted, whether the moving image to be displayed is the recorded program which is displayed using the second recording method and the second reproducing method, and whether the moving image to be displayed is the recorded program which is displayed using another recording method and another reproducing method.

The program-related information display generator 33 generates the program-related information display and displays the generated program-related information display in the display unit 120 via the various components as described above.

Thus, a sequence of the process flow is terminated.

Although the embodiment according to the present invention has been described above, the present invention is not limited to the above-mentioned embodiments but can be variously modified. Constituent components disclosed in the aforementioned embodiment may be combined suitably to form various modifications. For example, some of all constituent components disclosed in the embodiment may be removed, replaced, or may be appropriately combined with other components.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An electronic apparatus comprising:
a first reproducing module configured to switchably reproduce a first video program and a second video program, which are simultaneously recorded in different channels, the first reproducing module being configured to start reproducing the second video program, when switching reproduction from the first video program to the second video program, from a time point in the second video program, the time point corresponding to a time point in the first video program at which the reproduction of the first video program is terminated; and
a program-related information display generating module configured to generate a program-related information display when the first reproducing module reproduces a video program, the program-related information display indicating a recorded time at which an image of a currently reproduced video program is recorded and information related to a channel in which the currently reproduced video program is broadcasted.

2. The apparatus of Claim 1 further comprising:
a second reproducing module configured to exclusively reproduce a recorded video program,
wherein the program-related information display generating module is configured to generate the program-related information display indicating a recorded time at which an image of the recorded video program reproduced by the second reproducing module is recorded and the information related to a channel in which the recorded video program is broadcasted.

3. The apparatus of Claim 1,
wherein the program-related information display generating module is configured to generate the program-related information display further indicating a current clock-time.

4. The apparatus of Claim 1,
wherein the program-related information display generating module is configured to generate the program-related information display indicating that a clock-time at which a video program is recorded differs from a current clock-time.

5. The apparatus of Claim 1,
wherein the program-related information display generating module is configured to generate the program-related information display related to an on-air video program that is currently being broadcasted, and
wherein the program-related information display generating module is configured to generate the program-related information display in which a first display position of the recorded time of the currently reproduced video program and a second display position of a current time displayed in the program-related information display for the on-air video program are arranged to be in an aligned position.

6. A program-related information display generating method comprising:
switchably reproducing a first video program and a second video program, which are simultaneously recorded in different channels;
starting to reproduce the second video program, when switching reproduction from the first video program to the second video program, from a time point in the second video program, the time point corresponding to a time point in the fist video program at which reproduction of the first video program is terminated; and
generating a program-related information display when a video program is reproduced, the program-related information display indicating a recorded time at which an image of a currently reproduced video program is recorded and information related to a channel in which the currently reproduced video program is broadcasted.
